Europäisches Patentamt

European Patent Office

Office européen des brevets

(11) Numéro de publication: **0 406 072 A2**

## DEMANDE DE BREVET EUROPEEN

(21) Numéro de dépôt: **90401771.2**

(51) Int. Cl.5: **C04B 28/02, //C04B24/12**

(22) Date de dépôt: **22.06.90**

(30) Priorité: **29.06.89 US 372919**

(43) Date de publication de la demande:
**02.01.91 Bulletin 91/01**

(84) Etats contractants désignés:
**AT BE CH DE DK ES FR GB GR IT LI LU NL SE**

(71) Demandeur: **ESSROC Corp.**
**Connell Corporate Center, O. Two Oak Way**
**Berkeley Heights, NJ 07922(US)**

(72) Inventeur: **Lane, Donald R.**
**3623 Brush Road, P.O. Box 23**
**Richfield, Ohio 44286(US)**
Inventeur: **Melendez, Jose A.**
**76 Union Street**
**Bedford, Ohio 44146(US)**

(74) Mandataire: **Loyer, Bertrand et al**
**Cabinet Pierre Loyer 77, rue Boissière**
**F-75116 Paris(FR)**

(54) **Additif chimique pour les mélanges à base de ciments hydrauliques.**

(57) Mélange à base de ciment hydraulique comprenant un ciment hydraulique, de l'agrégat, suffisamment d'eau pour effectuer la prise hydraulique du ciment, et un additif entraîneur d'air consistant essentiellement en un diéthanolamide d'acide de noix de coco produit en faisant réagir un alkyl-ester de l'acide de noix de coco avec la diéthanolamine, ledit additif étant en quantité efficace comprise entre 0,0013 % et 0,004 %, un capramide-diéthanolamine en quantité efficace comprise entre 0,0008 % et 0,0024 %, et de l'acide ricinoléique en quantité efficace comprise entre 0,0003 % et 0,001 % en poids, rapporté au poids du ciment, au moyen duquel de l'air sera entraîné dans ledit mélange en quantité de 3 % à 9 % en volume dudit mélange.

EP 0 406 072 A2

## ADDITIF CHIMIQUE POUR LES MELANGES A BASE DE CIMENTS HYDRAULIQUES

La présente invention a trait à des compositions d'additifs pour le béton et le ciment, connues sous le nom d'additifs entraîneurs d'air, pour être incorporées à des mélanges destinés à la fabrication de ciments hydrauliques, tels que des ciments portland, des bétons et des mortiers, mais ne se limitant pas à ceux-ci, dans le but d'augmenter la tenue à long terme de ces mélanges à l'état durci, vis-à-vis des cycles de gel-dégel dans l'état de saturation en eau. L'amélioration de la tenue à long terme des mélanges à base de ciment dans de telles conditions est le résultat de la formation, dans le mélange plastique à base de ciment portland, d'un système de bulles d'air qui subsisteront dans le mélange après son durcissement et qui répondront aux spécifications de résistance au gel et au dégel stipulées dans la norme ASTM C-260. Cette norme exige que le système de cavités remplies d'air représente, en volume, un pourcentage spécifié de la masse durcie à base de ciment, et que cette masse contienne des bulles d'air dans une gamme spécifique de tailles et de paramètres d'espacement telle que définie dans la norme ASTM C-457. Il est bien connu dans le métier que, pour satisfaire à ces exigences, il est nécessaire d'utiliser des agents tensio-actifs pour obtenir le degré voulu d'entraînement de l'air.

Il existe un certain nombre d'agents chimiques pour obtenir le système d'entraînement d'air spécifié. En général, il s'agit de produits chimiques organiques qui sont classés, d'une manière large, en savons et en détergents. Un des agents chimiques de ce type parmi les mieux connus est connu dans le métier sous le nom de résine Vinsol, qui est un sel de résine de bois, et qui est la norme à laquelle sont comparés les autres agents entraîneurs d'air lors de leur essai selon la norme ASTM N° C-233. La résine Vinsol est normalement utilisée sous la forme d'une solution aqueuse alcaline qui est ajoutée à un mélange plastique à base de ciment, soit seule ou en combinaison avec d'autres additifs chimiques. Dans ce dernier cas, la solution de résine Vinsol est ajoutée séparément à cause de son incompatibilité chimique avec beaucoup d'autres additifs, parce que le pH et la présence de calcium et de divers autres ions rendent insolubles les acides neutralisés par un alcali constituant la résine Vinsol.

Il est également connu dans l'art antérieur d'utiliser des agents tensio-actifs divers, aussi bien anioniques que non-ioniques, dans la classe générale des détergents, pour obtenir le degré voulu d'entraînement d'air dans le ciment, le mortier et le béton. Souvent, ces agents sont utilisés en combinaisons diverses. Certains de ces agents tensio-actifs sont des sels ester ammonium sulfatés d'alcools primaires supérieurs (ou des produits d'addition avec l'oxyde d'éthylène), des sels de l'acide alkylbenzène-sulfonique, des sels des acides du pétrole et des acides gras, et des substances protéiniques, et des sels organiques d'hydrocarbures sulfonés.

Par exemple, US-A- 4,249,948 décrit l'utilisation d'un sulfonate d'une alpha-oléfine avec un agent réducteur de l'eau dans laquelle le sulfonate agit comme entraîneur d'air dans une composition à base de ciment hydraulique. US-A- 4,046,582 décrit l'utilisation comme entraîneur d'air d'un sulfate oxyalkylène d'un alcool secondaire supérieur; la demande internationale PCT N° WO 85/01,500 (Demande US N° 537,185 déposée le 29-9-1983) décrit l'utilisation d'un additif entraîneur d'air de type multiple pour les mélanges à base de ciment hydraulique, qui comprend un mélange de trois constituants, à savoir un sel d'acide alkylaryl-sulfonique, un sel alkanolamine d'un acide gras tel que l'huile de tall, et un constituant non-ionique choisi parmi les dérivés du polyéthylène-glycol et les produits obtenus par addition de diéthanolamine à la cocamide provenant de l'huile de noix de coco.

Toutefois, ces additifs entraîneurs d'air ne sont pas entièrement satisfaisants en ce qui concerne la stabilité des bulles d'air dans le béton, leur aptitude à remplir leur rôle en présence de cendres volantes dans le mélange, leur effet pour améliorer l'aptitude du béton à être mis en oeuvre, la nécessité d'utiliser des dosages plus élevés d'additifs de types connus, ou les tendances à perdre de l'air ou à augmenter la teneur en air d'une façon incontrolable , à mesure que le temps de mélangeage est prolongé. La perte d'aptitude à la mise en oeuvre est mesurée au moyen du "slump cone" (cône d'affaissement) selon la norme de l'American Society for Testing and Materials (ASTM) désignation C-143. Le principal inconvénient est la réduction des résistances à la compression, atteignant jusqu'à 5 % de perte de résistance par 1 % d'accroissement de l'air entraîné. Cette perte est due, pour une part, aux irrégularités dans les tailles des bulles et à la coalescence des bulles dans le mélange, provoquant des vides plus grands, ce qui réduit la résistance à la compression.

Dans le béton au ciment portland, la finesse du sable varie entre 2,2 et 3,5 du module de finesse, qui est un chiffre empirique pour déterminer la granulométrie des sables à gros grains. Plus fort est le module de finesse (MF) et plus les grains de sable sont gros. Il est bien connu que quand ce module s'écarte de 2,7 en plus ou en moins, il devient de plus en plus difficile d'entraîner de l'air dans le béton au ciment portland. Quand les sables arrivent à un module de finesse de 3,3, des grandes doses d'additif entraîneur d'air deviennent nécessaires pour maîtriser l'entraînement d'air.

Ainsi, il existe un besoin persistant de découvrir de nouveaux agents entraîneurs d'air améliorés, et surtout de tels agents capables de résoudre les problèmes décrits ci-dessus.

## Bref exposé de l'invention

La présente invention a trait à un additif chimique destiné à être combiné à des mélanges à base de ciment portland, tels que le béton, le mortier et l'enduit au ciment portland contenant diverses quantités de cendres volantes ou de laitier, dans le but d'y entraîner de l'air, ainsi qu'aux mélanges résultants améliorés auxquels est incorporée une composition additive.

Aux fins de la présente invention, le terme de "ciment hydraulique" se rapporte à toutes les compositions de ciments à base, essentiellement, de silicates capables de faire prise et de durcir par l'action de l'eau, tels que les ciments portland, le ciment résistant aux sulfates, les ciments de haut-fourneau et les ciments à base de pouzzolanes, y compris les mélanges de ciments où une partie du ciment portland a été remplacée par des cendres volantes ou du laitier. Le terme de "ciment portland" se réfère à toutes les compositions de ciments ayant une forte teneur en silicate tricalcique, conformes aux spécifications de la norme ASTM N° C-150, et les ciments portland mélangés tels que ceux décrits dans la norme ASTM N° C-595.

En général, l'invention comprend un mélange de ciment portland contenant des cendres volantes et/ou du ciment de laitier avec des agrégats, suffisamment d'eau pour réaliser la prise hydraulique du ciment, et un additif entraîneur d'air consistant essentiellement en un diéthanolamide ester-dérivé de l'acide de noix de coco, également connu sous le nom de cocoamide diéthanolamine, ou de cocamide DEA, tel que décrit plus complètement ci-après. Le cocamide DEA pourra être ajouté sous toute forme convenable, mais il est le plus commode de l'ajouter sous la forme d'une solution aqueuse.

Le dosage utilisé devrait être en quantité efficace pour entraîner la quantité d'air voulue, habituellement mesurée sous la forme d'un pourcentage en volume du mélange à base de ciment hydraulique. Ainsi que connu dans le métier, la quantité d'air qu'on désire entraîner est habituellement de l'ordre de 3 % à 9 % d'air, en volume. Cette quantité d'air est obtenue par un dosage de cocamide DEA ester-dérivé compris entre environ 0,001 % et 0,01 % en poids, basé sur le poids du ciment.

Le résultat inattendu et nullement évident obtenu en utilisant le cocamide DEA ester-dérivé tout seul dans un système à base de ciment subissant un mélangeage prolongé est de fournir, avec une réponse favorable au dosage, un excellent système de lacunes remplies d'air, qui est stable dans le système à base de ciment à l'état plastique, et ayant une répartition de tailles désirable et améliorée dans le système contenant du ciment, après durcissement, tout en procurant une résistance accrue à la compression, par rapport aux mélanges de référence.

C'est donc l'objectif de la présente invention de procurer des mélanges améliorés, à base de ciment portland avec de l'air entraîné, y compris le béton, le mortier, les enduits et les mélanges secs, ces mélanges contenant une composition additive capable d'entraîner avantageusement un système de lacunes remplies d'air ayant les caractéristiques désirées quand cet additif est utilisé dans une gamme de dosages relativement large, ou ayant une excellente réponse au dosage par rapport à des additifs fonctionnellement similaires, connus dans l'art antérieur.

C'est un autre objectif de la présente invention de procurer des résultats de résistance améliorés, qui comprennent une composition additive capable d'entraîner un système de lacunes remplies d'air et d'accroître les résistances à la compression par rapport aux agents entraîneurs d'air connus.

## Description de la forme de réalisation préférée

Le terme "cocamide DEA" est un nom qui a été appliqué par la "Cosmetic, Toiletry and Fragrance Association" (CTFA) à une grande diversité de compositions à base d'acide de noix de coco comprenant des produits d'addition du cocamide avec la diéthanolamine. Bien que toutes soient dénommées "cocamide DEA", elles sont produites par toute sorte de réactions. Dans un type de réaction, une réaction équimolaire est produite entre la diéthanolamine et l'un des produits suivants : un acide de noix de coco, également connu comme acide gras de noix de coco; un alkylester, habituellement un méthylester d'un acide de noix de coco; ou un triglycéride à base d'acide de noix de coco, tel que l'huile de noix de coco. Dans un autre type de réaction, on utilise un rapport molaire de 2/1 dans le procédé dit procédé Kritchevsky, qui est décrit dans US N° 2,094,609 au nom de W. Kritchevsky.

3

La présente invention est le résultat de la découverte inattendue que le cocamide DEA produit par le procédé au méthyl-ester, bien qu'il soit possible d'utiliser d'autres esters, est capable, en étant utilisé seul en quantités efficaces dans les mélanges à base de ciment hydraulique, de produire des volumes d'air stables, ayant la taille et la répartition désirables, tels que ceux qui sont utilisés pour augmenter la tenue à long terme aux alternances de gel et de dégel, ou pour produire des mélanges à base de ciment hydraulique avec air entraîné, pour d'autres raisons. En outre, il a été découvert qu'on obtenait avantageusement de plus fortes résistances à la compression en utilisant l'additif selon l'invention. Par commodité, le cocamide DEA obtenu par le procédé à l'ester sera désigné comme le cocamide DEA obtenu à l'ester.

Le cocamide DEA obtenu à l'ester est disponible dans le commerce sous les marques Comperlan KD et Standamid KD de Henkel International GmbH, Düsseldorf, Allemagne, et Ninol 49 CE de Stepan Company, Northfield, Illinois, USA.

Le terme "acide de noix de coco" signifie habituellement un mélange d'acides gras obtenus par hydrolyse de l'huile de noix de coco, et ayant des longueurs de chaînes acides variant entre 6 et 18 carbones, mais surtout 10, 12 et 14 carbones. Un acide de noix de coco préféré est un acide se composant approximativement de la gamme suivante d'acides gras :

| | |
|---|---|
| Acide Laurique | 46-58 % |
| Acide myristique | 15-23 % |
| Acide palmitique | 8-14 % |
| Acides stéarique et oléique | 7-24 % |

En outre, l'acide de noix de coco devrait avoir, de préférence, un indice d'acidité compris entre environ 246 et 260, et un indice de saponification compris entre environ 247 et 262, et un indice d'iode entre environ 10 et 20.

Le produit de réaction cocamide DEA résultant de la réaction de l'ester de noix de coco et de la diéthanolamine comprendra, de préférence, approximativement la composition suivante et aura un pH (en solution à 1 %) compris entre 8 et 10 et aura une densité de l'ordre de 8,3 à 8,5 pounds par gallon US de 3,7854 l, (soit 0,99 à 1,0185 kg/litre) et de préférence voisine de 8,43 pounds par gallon (soit 1,0101 kg/litre) :

| | |
|---|---|
| Amide de noix de coco | 85-90 % |
| Ester de noix de coco | 0-10 % |
| Acide de noix de coco, libre | 0-0,5% |
| Diéthanolamine, libre | 0-5 % |
| Eau | 0-0,5% |

Dans la pratique de la présente invention, l'additif est incorporé aux mélanges à base de ciment hydraulique, tels que des bétons et des mortiers au ciment portland, en quantités suffisantes pour fournir un système de lacunes à air entraîné en quantité convenable et de qualité convenable. En pratique, l'additif est incorporé au mélange sous la forme d'une solution aqueuse pouvant être de toute concentration commode.

L'additif pourra être incorporé au mélange sous forme d'une partie de l'eau de mélange, mais il peut aussi être incorporé de toute autre façon commode, y compris par addition au mélange sec ou à l'agrégat sec avant d'y ajouter l'eau.

Le terme "air entraîné" doit recevoir ici le sens usuel du métier, à savoir qu'en utilisant un agent dans ce but, la quantité d'air prévue et désirable, c'est à dire 3 % à 9 % en volume, rapporté au volume total du mélange à base de ciment hydraulique, sera incorporée à ce mélange se trouvant à l'état plastique, et en définitive au béton durci. Ceci permet d'améliorer la durée ou l'aptitude à l'emploi d'un béton ou d'un mortier ordinaire, sans air entraîné. En outre, les matériaux composant un mélange à béton, et le mélangeage lui-même, peuvent introduire un peu d'air dans le mélange, et souvent cet air est désigné comme l'air piégé. L'additif selon la présente invention est avantageux en ce sens qu'il produit, de manière inattendue , l'entraînement d'air en quantité prévue et désirée, et qu'en outre il s'avère stable pendant un mélangeage prolongé et bénéfique pour le béton durci parce qu'il a pour résultat d'accroitre les résistances à la compression.

Le terme "agrégat" doit s'entendre ici comme incluant à la fois les agrégats grossiers, tels que la pierre

4

broyée ou le gravier, et les agrégats fins, tels que le sable, ici comme c'est courant dans le métier. En général, l'agrégat dans les mortiers pourra être du sable ou un autre agrégat fin répondant aux spécifications de la norme ASTM N° C-33. Les proportions d'agrégat grossier et d'agrégat fin peuvent varier selon les propriétés et l'utilisation du béton ou du mortier. Dans la plupart des cas, mais non limitativement, l'agrégat grossier se situera dans la gamme large allant de 2 inches (7,6 cm) jusqu'à la maille 4, tandis que la taille de l'agrégat fin se situera dans la gamme large d'environ + 4 mesh à - 200 mesh du tamis US. Standard (ASTM C-11). L'agrégat grossier sera habituellement d'origine minérale, comme le gravier ou le calcaire broyé, mais ce peut être aussi un agrégat fabriqué, tel qu'un laitier. La quantité d'agrégat peut aller jusqu'à 80 % en poids, rapporté au poids total du mélange avec du ciment hydraulique, la gamme de 20 % à 80 % en poids étant préférée.

Pour les mortiers comme pour les bétons, la quantité d'eau utilisée serait suffisante pour réaliser la prise hydraulique du ciment dans le mélange et procurer une aptitude convenable au travail à l'état plastique. Cette quantité serait dans une gamme large d'environ 15 % à 30 % en poids du ciment dans les mortiers, et d'environ 50 % à 85 % en poids du ciment dans les mélanges de béton. La proportion précise de l'eau dépendra de l'utilisation finale du mélange à base de ciment, comme de sa composition.

Pour illustrer l'efficacité du cocamide DEA obtenu à l'ester pour la production de bulles d'air, en la comparant à celle d'autres agents entraîneurs d'air, connus et potentiels, des agents choisis ont été testés dans un test de mousse Henkel, dit "Henkel Foam Test". Ce qui suit est la "Foam Test Methodology" énoncée dans un bulletin technique de Henkel International GmbH pour les alkanolamides de la marque "Standamid".

"Méthodologie d'essai de mousse"

"La procédure d'essai suivante, mise au point par Henkel, est une façon simple de faire une détermination exacte du volume de mousse et du drainage de la mousse :

"Préparer une solution aqueuse à 10 % du produit à évaluer. Ajouter six (6) grammes de cette solution à 144 grammes d'eau, dureté 50 ppm, chauffée à 29° C ± 1° C. Agiter pendant dix (10) secondes dans un mélangeur de type "osterizer". Agiter à vitesse moyenne. Mesurer le volume initial de mousse à 5 ml près, et noter la position de l'interface mousse/eau après 3,5 minutes. Cette dernière lecture représente le drainage de la mousse"

L'essai a été modifié en utilisant des solutions aqueuses à 5 % et en plaçant 300 cm³ de chaque solution dans un récipient gradué en millimètres, à utiliser avec le mélangeur de type "Osterizer". Comme dans le test Henkel, la solution est agitée pendant dix (10) secondes à vitesse moyenne. Le brassage produit une certaine quantité de mousse qui flotte au dessus d'une interface liquide et qui est mesurée comme l'interface initiale; le récipient est ensuite laissé au repos pendant une (1) heure. Ceci fait, tout ou partie de la mousse retourne en liquide. Ce retour est dénommé "drainage de la mousse" et il s'établit une nouvelle interface liquide-mousse, ou interface finale, quelque part entre l'interface initiale et le niveau de 300 cm³, auquel commençait le liquide. On mesure alors le niveau de l'interface finale liquide-mousse. Le pourcentage de drainage de mousse est calculé en divisant la différence entre le niveau de 300 cm³ de chaque solution et l'interface initiale, et en multipliant par 100. Les résultats pour chaque agent testé sont consignés dans le Tableau I. La quantité de drainage de la mousse est considérée comme reflétant la stabilité des bulles produites.

Egalement noté dans le Tableau I se trouve le poids unitaire des bulles produites, dénommé "densité des bulles". Pour obtenir ce poids unitaire, un essai supplémentaire a été réalisé en utilisant la même méthodologie Henkel d'essai de mousse. On a mis 300 cm³ de chaque solution dans le mélangeur de type "Osterizer", on a agité pendant dix (10) secondes à vitesse moyenne, puis on a laissé reposer pendant une (1) heure. Les bulles ou la mousse restantes ont ensuite été retirées du mélangeur, mises dans un dispositif mesureur volumétrique, et pesées. Les valeurs ont alors été converties en poids par cubic foot.

EP 0 406 072 A2

TABLEAU I

| Agent essayé | Drainage de la mousse(%) | Densité des bulles | |
|---|---|---|---|
| | | lb/ft³ | g/litre |
| Cocamide DEA (obtenu par ester)* | 16,7 | 22,9 | 352 |
| Cocamide DEA (procédé Kritchevsky) | 96,6 | 10,4 | 166 |
| Cocamido-propyl-bétaïne | 99,4 | 1,4 | 22,4 |
| Cocamide DEA (obtenu par ester)** | 86,0 | 12,6 | 202 |
| Cocamide DEA (provenant de l'huile) | 97,3 | 4,8 | 77 |
| Sulfate de lauryle-sodium | 99,3 | 1,5 | 24 |
| Sulfate de lauryle-ammonium | 98,0 | 1,7 | 27 |
| Sulf.de lauryle-triéthanolamine | 99,8 | 1,3 | 21 |
| Sulfate d'octyle-sodium | 99,2 | 0,9 | 14 |
| Mono-oléamide-disodium | 98,3 | 1,7 | 27 |
| Sulfosuccinate de diglycol | | | |
| Sels de résine de bois | 98,1 | 1,8 | 29 |
| Alkyl•phénoxy-polyéthoxy-éthanol | 98,0 | 1,9 | 30,4 |

* Fourni par la Source I (Henkel)
** Fourni par la Source II (Stepan)

Ces résultats démontrent que le cocamide DEA obtenu à partir d'un ester a une remarquable combinaison de rétention du volume des bulles, telle que mesurée par le faible drainage de la mousse et le poids unitaire plus fort. Un intérêt particulier tient à la performance par rapport aux sels de résine de bois, tels qu'ils sont utilisés dans les mélanges entraîneurs d'air à base de résine Vinsol, par comparaison au cocamide DEA obtenu à partir d'un ester. Le cocamide DEA provenant de la Source I a donné les meilleurs résultats, avec seulement 16,7 % de drainage de la mousse, contre 98,1 % pour les sels de résine de bois. En outre, le cocamide DEA (Source I) a donné, aux essais, une densité de bulles de 22,9 lb/cu.ft. (352 grammes/litre), contre 1,8 lb/cu.ft. (29 g/litre) pour les sels de résine de bois. Le cocamide DEA de la Source II n'avait pas une performance aussi bonne que celui de la Source I, mais il avait encore une combinaison acceptable de drainage de la mousse (86,0 %) et de densité de bulles, de 12,6 lb/cu.ft. (202 g/l), surtout par comparaison, par exemple, avec le cocamide DEA obtenu par le procédé Kritchevsky, qui avait une densité de bulles relativement forte, de 10,4 lb/cu.ft. (116 g/l), mais avait un drainage de mousse très élevé, de 96,6 %. Ainsi, un cocamide DEA obtenu à partir d'un ester ayant un drainage de mousse atteignant au maximum environ 86 % ou moins, et une densité des bulles de 12 lbs/cu.ft. (192 g/l) est préféré.

On suppose que la raison pour le poids unitaire (des bulles) plus grand pour le cocamide DEA provenant d'un ester tient à la plus grande épaisseur des parois des bulles. Quand une partie des bulles produites dans l'essai de mousse Henkel modifié est posée sur une lame ayant une dépression sphérique et examinée au microscope ordinaire, les bulles du cocamide DEA de la Source I sont vues comme des bulles sphériques ayant des parois plus épaisses, tandis que les bulles de résine de bois ont des parois relativement minces et ont tendance à s'éloigner de la forme sphérique, certaines étant oblongues. Ce genre de différences devrait produire une structure de bulles d'air plus stable et plus uniforme au sein d'un mélange à base de ciment hydraulique.

Afin d'illustrer les résultats avantageux pouvant être obtenus par la pratique de la présente invention dans des mélanges à base de ciment hydraulique, on a préparé des mélanges de béton selon les normes ASTM C-494 et C-233. On a fait des mélanges contenant les additifs de la présente invention et des additifs à la résine Vinsol. La séquence des opérations dans cette procédure était : préparation de mélanges de béton avec un affaissement nominal de 2 inches ± 1/2 inch (50,8 ± 12,7 mm), et un dosage de mélange entraîneur d'air, par 100 lbs (45,36 kg) de ciment susceptible de produire une teneur en air de 5,5 % ± 0,5 % en volume du béton. Chaque mélange a été défini pour un total de 517 lbs/yd³ (306 kg/m³) de ciment portland, un rapport sable-agrégat de 0,89 et le même rapport eau/ciment (0,31). Le béton, avec une quantité d'eau appropriée pour obtenir l'indice d'affaissement spécifié a alors été mélangé dans une bétonnière d'une capacité de 6 cu.ft. (170 litres). Ensuite, on a prélevé des éprouvettes cylindriques de 6" x 12" (152 x 304 mm) pour des déterminations ultérieures des résistances à la compression et des

6

paramètres du système de bulles d'air après durcissement. La teneur en air initiale d'un échantillon du béton plastique a été déterminée par la méthode du manomètre telle que décrite dans la méthode normalisée ASTM C-231 et l'indice d'affaissement, qui est un indice d'aptitude au façonnage, a été déterminé selon la méthode normalisée ASTM C-143.

Les résultats des essais sont présentés dans le Tableau II et une comparaison est faite entre un cocamide DEA obtenu à partir d'un ester (de la Source I) et un agent entraîneur d'air à base de résine Vinsol. Dans chaque cas, la vitesse de durcissement se situait dans la spécification ASTM C-233. On peut voir d'après le Tableau II que le cocamide DEA obtenu à partir d'un ester produisait la quantité d'air prévue et désirable, ainsi qu'une rétention favorable de l'air, et qu'en outre il donnait d'appréciables augmentations de résistance à la compression, par comparaison avec le béton contenant la résine Vinsol.

TABLEAU II

| RESULTATS D'ESSAIS | | | | | |
|---|---|---|---|---|---|
| | Résine Vinsol (témoin) | | Cocamide DEA obtenu à partir d'un ester | | Différence % avec le témoin |
| Air entraîné (%) | 6 | | 5,7 | | |
| Résistance à la compression (PSI) (MPA) | PSI | MPa | PSI | MPa | |
| 1 jour | 1950 | 13,43 | 2360 | 16,26 | 121 % |
| 3 jours | 3410 | 23,50 | 3950 | 27,21 | 116 % |
| 7 jours | 4140 | 28,52 | 4530 | 31,21 | 109 % |
| 28 jours | 5235 | 36,07 | 5640 | 38,86 | 108 % |

Afin d'évaluer l'air entraîné dans le béton durci, une des éprouvettes du béton produit avec le cocamide DEA obtenu à partir d'un ester, et produite dans les essais discutés plus haut, a été examinée au microscope selon la méthode ASTM C-457, avec les résultats présentés au Tableau III.

TABLEAU III

| ANALYSE DES CAVITES D'AIR | | | | | | |
|---|---|---|---|---|---|---|
| Teneur en air | | Teneur en pâte* | Surface spécifique | | Facteur d'espacement | |
| % en volume | | | | | | |
| (Plastique) | (Durci) | % en volume | Inches⁻¹ | m⁻¹ | L,inch | L,mm |
| 5,7 | 6,7 | 23,83 | 500 | 12,7 | 0,007 | 0,178 |

\* Total des volumes de ciment portland et d'eau de mélange

Comme on peut le voir, le facteur d'espacement L est égal à 0,007 inch (0,178 mm), ce qui est moins que le facteur de 0,008 inch (0,203 mm) et plus que 0,004 (0,102mm) qui sont les limites usuelles recommandées pour un béton durable, c'est à dire résistant au gel et au dégel.

Dans un autre essai, une comparaison a été faite entre un béton plein, qui était le témoin et ne contenait pas d'agent entraîneur d'air, un mélange avec résine Vinsol, et un mélange contenant un cocamide DEA obtenu à partir d'un ester (Source I). Les spécifications du mélange étaient semblables à celles du Tableau II, sauf que les cônes d'affaissement étaient de 4 inches ± 1/2 inch (101,6 mm ± 12,7 mm). Comme on le verra dans le Tableau IV, le cocamide DEA d'ester a donné des résistances à la compression nettement plus fortes que la résine Vinsol et que le mélange témoin, et a produit l'entraînement d'air désirable.

# EP 0 406 072 A2

TABLEAU IV

|  | | Témoin | | Résine Vinsol | | Cocamide DEA (ester) | |
|---|---|---|---|---|---|---|---|
|  | | PSI | MPa | PSI | MPa | PSI | MPa |
| Dosage (% en poids du ciment | | - | | 0,0087 | | 0,0039 | |
| Teneur en air (% en vol. après 10 minutes) | | - | | 5,1 % | | 5,8 % | |
| Résistance PSI et MPa | | | | | | | |
| - à 7 jours (%, comparé au témoin) | | 3497 | 24,1 | 3520 (100,7) | 24,25 | 3820 (109,2) | 26,32 |
| - à 28 jours (%, comparé au témoin) | | 4400 | 30,32 | 4316 (98,1) | 29,74 | 4733 (107,2) | 32,61 |

Dans encore un autre essai, le malaxage a été prolongé avec une série de mélanges à béton contenant un cocamide DEA obtenu à partir d'ester, de la Source I (dit Mix A), un cocamide DEA, obtenu à partir d'ester, de la Source II (Mix B), et un cocamide DEA obtenu par le procédé Kritchevsky (Mix C) tels qu'utilisés dans les essais présentés dans le Tableau I. Ce test a été fait pour établir la performance de stabilité des bulles d'air au cours d'un temps de malaxage comparable à celui du béton sur un chantier. La spécification du mélange est indiquée dans le Tableau V. Le malaxage a été continu pendant 50 minutes, sauf pour le prélèvement d'éprouvettes pour mesurer la teneur en air. On a ensuite ajouté de l'eau pour rétablir l'indice d'affaissement, aussi près que possible de la valeur initiale.

TABLEAU V

| Composition du mélange de béton | | | | | | | |
|---|---|---|---|---|---|---|---|
| Ciment<br>Pierre (2% $H_2O$)<br>Sable (6% $H_2O$)<br>Eau<br>Additif | 564 lbs Medusa Type 1<br>1834 lbs Calcaire de Sandusky<br>1377 lbs Twin Lakes<br>202 lbs<br>0,0039 % en poids du ciment | | | | | | |
|  | Mix. A | | | Mix. B | | Mix. C | |
| Durée de mixage | Affaiss$^t$ | | Air % | Affaiss$^t$ | Air % | Affaiss$^t$ | Air % |
| 4 minutes | | 4-1/2" | 4,5 | 4" | 6,5 | 4-1/2" | 3,5 |
| 15 minutes | | 4" | 6,5 | 4" | 7,0 | 3" | 3,0 |
| 30 minutes | | 3" | 6,5 | 3" | 5,5 | 1" | 2,5 |
| 45 minutes | | 2-1/2" | 6,5 | 1-1/2" | 4,0 | - | - |
| 50 minutes (remixage)* | | 3-3/4" | 6,6 | 4-3/4" | 4,5 | - | - |

* De l'eau a été ajoutée pour ramener l'affaissement à sa valeur initiale approximative.

Comme on peut le voir sur le Tableau V, l'additif selon l'invention, à savoir un cocamide DEA obtenu à partir d'un ester, a accompli une quantité désirable d'entraînement d'air, qui s'est avérée relativement stable avec un mélangeage prolongé. Ceci contraste avec le Mix. C qui contenait un cocamide DEA obtenu par le procédé Kritchevsky et qui a produit seulement un entraînement minimum de l'air et qui a présenté une mauvaise rétention de l'air. En fait, l'essai a été interrompu au bout de 30 minutes parceque l'air est tombé en dessous du minimum désirable de 3 % d'entraînement d'air. La teneur en air et les valeurs de rétention semblent certainement être en corrélation avec le drainage de la mousse et les données de densité des bulles indiquées au Tableau I et démontrent que le cocamide DEA obtenu à partir d'un ester est un agent entraîneur d'air supérieur.

D'autres essais ont été entrepris pour s'attaquer au problème du maintien d'une teneur stable en air en présence de variations du module de finesse d'un agrégat fin utilisé dans du béton. Il a été constaté qu'avec le cocamide DEA obtenu à partir d'un ester et avec des sables ayant des modules de finesse dans la gamme de 3,2 à 3,5, il était nécessaire d'utiliser des doses supérieures à la normale pour obtenir un entraînement d'air satisfaisant. Des résultats inattendus ont été obtenus en ajoutant des pourcentages variables de capramide DEA au cocamide DEA obtenu à partir d'un ester: Selon le pourcentage de capramide par rapport au cocamide DEA, les teneurs en air ont continué à augmenter dans des sables grossiers quand on augmentait la dose de capramide DEA. Les essais suivants ont été faits avec des sables ayant un module de finesse de 3,3, et les résultats ont été les suivants.

TABLEAU VI :

| Teneurs en air | | | | |
|---|---|---|---|---|
| | 6 %<br>Ester | 5,5 %<br>Ester | 5 %<br>Ester | 4 %<br>Ester |
| Durée de<br>mixage | 0 %<br>Capr. | 0,5 %<br>Capr. | 1 %<br>Capr. | 2 %<br>Capr. |
| 8 minutes | 3,5 | 4,2 | 4,6 | 5,1 |
| 18 minutes | 3,5 | 4,5 | 5,1 | 5,6 |
| 28 minutes | 3,75 | 4,5 | 5,2 | 6,2 |
| 38 minutes | 3,7 | 4,2 | 5,3 | 6,4 |
| Note : Affaissement inital : 2,5 - 3 " (= 63,5 - 76,2 mm)<br>Note : Eau ajoutée à 28 minutes pour rétablir l'affaissement initial. | | | | |

Les résultats non-évidents obtenus en mélangeant le capramide DEA au cocamide DEA montrent un entraînement de l'air accru et stable pour des sables donnant lieu à problèmes dans l'industrie du béton. Le capramide DEA est fabriqué principalement à partir d'acides gras capriques ($C_{10}$). C'est essentiellement un intensificateur de moussage avec beaucoup moins d'effets augmentant la viscosité que les alkanolamines supérieures. Ceci facilite le renforcement du volume de mousse, de la densité, de la lubrification et de la stabilité. Selon les variations du sable, le mélange d'une diéthanolamine d'acide de noix de coco (produite par réaction d'un alkyl-ester et d'un acide de noix de coco avec une diéthanolamine) et une diéthanolamine de capramide, aide à la production de volumes d'air stables.

L'addition de capramide DEA ci-dessus a résolu le problème de l'obtention d'un entraînement d'air satisfaisant quand les sables utilisés avaient un module de finesse entre 2,4 et 3,0, mais l'entraînement d'air diminuait quand on introduisait dans le mélange des cendres volantes ou un sable ayant un module de finesse nettement inférieur. Ce problème a été résolu en ajoutant de l'acide ricinoléique au capramide DEA et au cocamide DEA obtenu à partir d'un ester. Des essais ont été faits sur des mélanges utilisant 14 % de cendres volantes de type "F" avec l'additif précité, et les résultats ont été les suivants :

(voir Tableau VII, page suivante)

TABLEAU VII

| | 4,0 % Ester | | | |
| | 2,5 % Caprique | | | |
| | 1,0 % Ac.Ricinoléique | | Mélange de Résine Vinsol | |
| Durée de mixage | Affaissement | Air % | Affaissement | Air % |
|---|---|---|---|---|
| 18 minutes | 6" | 8,5 | 6-3/8" | 7,5 |
| 36 minutes | 4-1/4" | 7,75 | 4-1/2" | 6,5 |
| 54 minutes | 2-3/4" | 6,25 | 3" | 5,25 |
| 72 minutes | 2" | 5,5 | 1-1/4" | 4,75 |
| 83 minutes (remixage)* | 4-3/4" | 6,0 | 3" | 5,25 |

\* On a ajouté 12 onces (355 millilitres) d'eau pour augmenter l'affaissement.

Les données du Tableau ci-dessus indiquent que le mélange d'acide ricinoléique, de capramide DEA et de cocamide DEA a donné lieu à un entraînement d'air accru dans des mélanges contenant des cendres volantes. Il y a eu non seulement une augmentation de l'entraînement d'air avec l'addition d'acide ricinoléique, mais cette addition n'a pas eu d'effet défavorable sur les résistances à la compression; au contraire, elle les a plutôt augmentées, comme le montre le Tableau suivant :

TABLEAU VIII

| RESISTANCES A LA COMPRESSION (psi et MPa) | | | | | | |
| | 4,0 % Ester | | | | | |
| | 2,5 % Capramide | | | | | |
| Durée de séchage | 1,0 % Ac.Ricinoléique | | | Mélange de Résine Vinsol | | |
| | psi | MPa | | psi | MPa | |
|---|---|---|---|---|---|---|
| 1 jour | 1256 | 8,65 | Avec 8,5% d'air 6" d'affai-ss.ᵗ | 1094 | 7,54 | Avec 7,5% d'air 6-3/8" d'affais-s.ᵗ |
| 3 jours | 2484 | 17,11 | | 2158 | 14,86 | |
| 7 jours | 2740 | 18,87 | | 2536 | 17,47 | |
| 28 jours | 4628 | 31,88 | | 4518 | 31,13 | |

Cette augmentation de la résistance à la compression, avec une augmentation de l'entraînement d'air,était inattendue, étant donné que normalement une augmentation de l'entraînement d'air a pour effet une diminution de la résistance à la compression. Ainsi, le mélange d'acide ricinoléique, de capramide DEA et de cocamide DEA, obtenu à partir d'un ester, procure deux avantages significatifs, à savoir un accroissement de l'entraînement d'air et de la résistance à la compression.

Des résultats similaires ont été obtenus en utilisant un mélange d'acide ricinoléique, de capramide DEA et de cocamide DEA avec un sable ayant un module de finesse de 2,26. Normalement, avec un sable ayant un module de finesse aussi bas, il est difficile d'obtenir un entraînement d'air de 4,0 % ou plus avec les dosages normaux. Il est à noter que si l'entraînement d'air tombe à 3 % ou moins, on admet que le ciment ne contient pas d'air entraîné. Des essais ont été faits sur des mélanges utilisant des sables ayant un module de finesse de 2,26 avec un mélange d'acide ricinoléique, de capramide DEA et de cocamide DEA obtenu à partir d'un ester, et les résultats ont été les suivants :

TABLEAU IX

| | 4,0 % Ester | | | |
| | 2,5 % Capramide | | | |
| | 1,0 % Ac. Ricinoléique | | Mélange de résine Vinsol | |
| Durée de mixage | Affaiss[t] | Air % | Affaiss[t] | Air % |
|---|---|---|---|---|
| 18 minutes | 5" | 5,0 | 4" | 4,75 |
| 36 minutes | 2-3/4" | 4,5 | 2-1/2" | 4,0 |
| 54 minutes | 2-1/4" | 4,0 | 1-1/4" | 3,5 |
| 72 minutes | 1-1/2" | 3,75 | 3/4" | 3,0 |
| 83 minutes (remixage)* | 4-1/2" | 4,50 | 3-1/4" | 3,75 |

* On a ajouté 13 onces (384 millilitres) d'eau pour augmenter l'affaissement.

Ainsi, le mélange d'acide ricinoléique avec le capramide DEA et le cocamide DEA a augmenté le pourcentage d'entraînement d'air jusqu'à des niveaux acceptables dans des mélanges utilisant des sables ayant un module de finesse extrêmement bas. De plus, de même que dans le cas précédent des cendres volantes, le mélange d'acide ricinoléique avec le capramide DEA et le cocamide DEA a aussi augmenté notablement la résistance à la compression du mélange obtenu, comme le montre le Tableau suivant :

TABLEAU X

| RESISTANCES A LA COMPRESSION (psi et MPa) | | | | | | |
| | 4,0 % Ester | | | | | |
| | 2,5 % Capramide | | | | | |
| Séchage | 1,0 % Ac.ricinoléique | | | Mélange de résine Vinsol | | |
| | psi | MPa | | psi | MPa | |
|---|---|---|---|---|---|---|
| 1 jour | 1463 | 10,08 | Avec 5,0% d'air 5" affaiss-s[t] | 1252 | 8,62 | Avec 4,75% d'air 4" affaiss[t] |
| 3 jours | 2318 | 15,97 | | 2130 | 14,67 | |
| 7 jours | 3628 | 25,00 | | 3439 | 23,69 | |
| 28 jours | 4886 | 33,66 | | 4492 | 30,95 | |

Les résultats ci-dessus pour la résistance à la compression procurent encore un autre résultat inattendu, à savoir une augmentation de la résistance à la compression avec une augmentation de l'affaissement. Ainsi, dans ce cas, le mélange d'acide ricinoléique, de capramide DEA et de cocamide DEA d'ester a augmenté l'entraînement d'air, la résistance à la compression et l'affaissement.

Pour continuer à déterminer les effets du mélange d'acide ricinoléique avec le capramide DEA et le cocamide DEA, on a fait des essais de cet additif avec un sable ayant un module de finesse de 3,0. Les résultats de ces essais, qui ont été réalisés à 134° F (56,6° C), sont indiqués dans le Tableau suivant :

11

EP 0 406 072 A2

TABLEAU XI

| Mixage | 4,0 % Ester | | Mélange de de résine Vinsol | |
| | 2,5 % Capramide | | | |
| | 1,0 % Ac.ricinoléique | | | |
| | Affaissement | Air % | Affaissement | Air % |
|---|---|---|---|---|
| 18 minutes | 7" | 7,2 | 7-1/4" | 6,8 |
| 36 minutes | 5-1/2" | 7,3 | 4-1/4" | 6,5 |
| 54 minutes | 3" | 6,5 | 2" | 5,25 |
| 72 minutes | 2-1/4" | 5,6 | 1-3/8" | 4,5 |
| 83 minutes (remixage)* | 6" | 6,75 | 6" | 5,0 |

* On a ajouté 13 onces (384 millilitres) d'eau au mélange à 4,0 % d'ester, 2,5 % de capramide et 1,0 % d'acide ricinoléique pour augmenter l'affaissement, et 1 lb 8 onces (= 690,2 millilitres) d'eau au mélange de résine Vinso pour augmenter l'affaissement.

Ici, une fois de plus, l'addition d'acide ricinoléique au capramide DEA et au cocamide DEA d'ester a augmenté notablement l'entraînement d'air, même avec des sables ayant un module de finesse moyen, c'est à dire 3,0. Comme dans les exemples précédents, le mélange d'acide ricinoléique avec le capramide DEA et le cocamide DEA d'ester a encore donné lieu à une augmentation notable de la résistance à la compression du mélange résultant, comme indiqué dans le Tableau suivant :

TABLEAU XII

| RESISTANCES A LA COMPRESSION (psi et MPa) | | | | | | |
|---|---|---|---|---|---|---|
| | 4,0 % Ester | | | | | |
| | 2,5 % Capramide | | | | | |
| | 1,0 % Ac.ricinoléique | | | Mélange de résine Vinsol | | |
| Séchage | psi | MPa | | psi | MPa | |
| 1 jour | 1556 | 10,72 | Avec | 1314 | 9,05 | Avec |
| 3 jours | 3034 | 20,90 | 7,2% | 2632 | 18,13 | 6,8% |
| 7 jours | 4248 | 29,27 | d'air | 3688 | 25,41 | d'air |
| 28 jours | 8434 | 37,44 | 7" | 4806 | 33,41 | 7-1/4" |
| | | | affais-s$^t$ | | | affaiss$^t$ |

Dans ce cas, le mélange d'acide ricinoléique avec le capramide DEA et le cocamide DEA d'ester a procuré une très notable augmentation de la résistance à la compression, environ 15 %.

D'après ce qui précède, il est évident que le mélange d'acide ricinoléique avec le capramide DEA et le cocamide DEA d'ester procure une quantité de résultats désirables. Par exemple, l'utilisation de l'acide ricinoléique comme partie de l'additif augmente l'entraînement d'air, quel que soit le module de finesse du sable utilisé, et qu'il y ait ou non introduction de cendres volantes dans le mélange. Même avec des durées prolongées de malaxage, le pourcentage d'entraînement d'air est resté au dessus des limites acceptables. Ainsi, des mélanges contenant de l'acide ricinoléique et du capramide DEA et du cocamide DEA d'ester peuvent tolérer un temps de transport plus long et un temps de malaxage plus long jusqu'à l'utilisation finale sur chantier. Sur le chantier, l'utilisateur ajouterait normalement de l'eau pour augmenter l'affaissement, ce qui peut augmenter l'entraînement d'air, mais il a été constaté que cette augmentation est généralement insignifiante. Avec l'addition d'acide ricinoléique au capramide DEA et au cocamide DEA

12

d'ester, l'entraînement d'air restera à des niveaux acceptables, même avec des durées de malaxage prolongées, et il n'est pas nécessaire de recourir à l'addition d'eau pour augmenter légèrement l'entraînement d'air. Il a en outre été constaté que des mélanges contenant de l'acide ricinoléique, du capramide DEA et du cocamide DEA obtenu à partir d'ester peuvent tolérer des températures relativement élevées pendant de longues périodes. Par exemple, la température utilisée pour l'essai des Tableaux XI et XII était de 134°F (56,6°C). Ainsi, des températures élevées n'ont pas d'effet défavorable sur des mélanges utilisant l'acide ricinoléique en combinaison avec le capramide DEA et le cocamide DEA d'ester. Ce n'est pas le cas avec des mélanges utilisant d'autres types d'additifs. En résumé, le mélange d'acide ricinoléique avec le capramide DEA et le cocamide DEA d'ester a donné des résultats très désirables et bénéfiques.

Sans sortir du cadre de la présente invention, il est possible en particulier d'ajouter à des solutions aqueuses des constituants décrits ci-dessus de petites quantités d'agents de chélation compatibles pour des cations alcalino-terreux tels que le magnésium ou le calcium qui sont normalement présents dans l'eau ordinaire mais qui ont aussi tendance à précipiter les agents tensio-actifs. En outre, on peut aussi ajouter de petites quantités de colorants compatibles, ou de biocides ou autres ingrédients similaires. En outre, l'additif selon la présente invention pourrait être utilisé avec addition d'autres additifs ajoutés dans d'autres buts qui leur sont propres, par exemple l'utilisation d'additifs réducteurs de l'eau pour augmenter la résistance à la compression, ou des additifs accélérateurs ou retardateurs pour changer la vitesse de prise des mélanges contenant du ciment hydraulique.

## Revendications

1. Mélange à base de ciment hydraulique comprenant un ciment hydraulique, de l'agrégat, suffisamment d'eau pour effectuer la prise hydraulique du ciment, et un additif entraîneur d'air consistant essentiellement en un diéthanolamide d'acide de noix de coco produit en faisant réagir un alkyl-ester de l'acide de noix de coco avec la diéthanolamine, ledit additif étant en quantité efficace comprise entre 0,0013 % et 0,004 %, un capramide-diéthanolamine en quantité efficace comprise entre 0,0008 % et 0,0024 %, et de l'acide ricinoléique en quantité efficace comprise entre 0,0003 % et 0,001 % en poids, rapporté au poids du ciment, au moyen duquel de l'air sera entraîné dans ledit mélange en quantité de 3 % à 9 % en volume dudit mélange.

2. Mélange à base de ciment hydraulique selon la revendication 1, dans lequel ledit ciment hydraulique comprend du ciment portland.

3. Mélange à base de ciment hydraulique selon la revendication 1, dans lequel ledit agrégat est présent en quantité jusqu'à 80 % en poids, rapporté au poids total du mélange à base de ciment hydraulique.

4. Mélange à base de ciment hydraulique selon la revendication 1, dans lequel ledit agrégat est présent en quantité comprise entre 20 % et 80 % en poids.

5. Mélange à base de ciment hydraulique selon la revendication 1, dans lequel ledit acide de noix de coco a la composition suivante :

| | |
|---|---|
| Acide laurique | 46 - 58 % |
| Acide myristique | 15 - 23 % |
| Acide palmitique | 8 - 14 % |
| Acides stéarique et oléique | 7 - 24 % |

6. Mélange à base de ciment hydraulique selon la revendication 1, dans lequel ledit produit de la réaction de l'acide de noix de coco et de la diéthanolamine a la composition suivante :

| | |
|---|---|
| Acide de noix de coco-diéthanolamine | 85 - 90 % |
| Alkyle de l'acide de noix de coco | 0 - 10 % |
| Acide de noix de coco | 0 - 0,5 % |
| Diéthanolamine | 0 - 5 % |

7. Mélange à base de ciment hydraulique selon la revendication 1, dans lequel ladite réaction est conduite avec des moles égales d'alkyl-ester de noix de coco et de diéthanolamine.

8. Mélange à base de ciment hydraulique selon la revendication 1, dans lequel ledit capramide-diéthanolamine comprend :

| Acide octanoïque en $C_8$ | 0,5 - 1,5 % |
|---|---|
| Acide caprique en $C_{10}$ | 94 - 98 % |
| Acide laurique en $C_{12}$ | 1,5 - 2,5 % |

9. Mélange à base de ciment hydraulique selon la revendication 1, dans lequel ledit acide ricinoléique comprend :
de l'acide 12-hydroxy-9-octadécenoïque

10. Procédé pour entraîner de l'air dans un mélange à base de ciment hydraulique comprenant du ciment hydraulique, de l'agrégat, et suffisamment d'eau pour effectuer la prise hydraulique du ciment, comprenant l'addition d'un additif consistant essentiellement en diéthanolamide d'acide de noix de coco produit en faisant réagir un alkyl-ester de l'acide de noix de coco avec la diéthanolamine, ledit additif étant en quantité efficace comprise entre 0,0013 % et 0,004 %, un capramide-diéthanolamine en quantité efficace comprise entre 0,0008 % et 0,0024 %, et de l'acide ricinoléique en quantité efficace comprise entre 0,0003 % et 0,001 % en poids rapporté au poids du ciment, grâce à quoi de l'air sera entraîné dans ledit mélange en quantité de 3 % à 9 % en volume dudit mélange.

11. Procédé pour entraîner de l'air dans un mélange à base de ciment hydraulique selon la revendication 10, dans lequel ledit ciment hydraulique comprend du ciment portland.

12. Procédé pour entraîner de l'air dans un mélange à base de ciment hydraulique selon la revendication 10, dans lequel ledit agrégat est présent en quantité allant jusqu'à 80 % en poids, rapporté au poids total du mélange à base de ciment hydraulique.

13. Procédé pour entraîner de l'air dans un mélange à base de ciment hydraulique selon la revendication 10, dans lequel ledit acide de noix de coco a la composition suivante:

| Acide laurique | 46 - 58 % |
|---|---|
| Acide myristique | 15 - 23 % |
| Acide palmitique | 8 - 14 % |
| Acides stéarique et oléique | 7 - 24 % |

14. Procédé pour entraîner de l'air dans un mélange à base de ciment hydraulique selon la revendication 10, dans lequel ledit produit de la réaction formant le diéthanolamide de l'acide de noix de coco comprend :

| Diéthanolamide de l'acide de noix de coco | 85 - 90 % |
|---|---|
| Alkyl-acide de noix de coco | 0 - 10 % |
| Acide de noix de coco | 0 - 0,5 % |
| Diéthanolamine | 0 - 5 % |

15. Procédé pour entraîner de l'air dans un mélange à base de ciment hydraulique selon la revendication 10, dans lequel ladite réaction est conduite avec des moles égales d'alkyl-ester de noix de coco et de diéthanolamine.

16. Procédé pour entraîner de l'air dans un mélange à base de ciment hydraulique selon la revendication 10, dans lequel ledit capramide-diéthanolamine comprend :

| Ocide octanoïque en $C_8$ | 0,5 - 1,5 % |
|---|---|
| Acide caprique en $C_{10}$ | 94 - 98 % |
| Acide laurique en $C_{12}$ | 1,5 - 2,5 % |

17. Mélange à base de ciment hydraulique selon la revendication 10, dans lequel ledit acide ricinoléique comprend:
de l'acide 12-hydroxy-9-octadecenoïque

18. Produit préparé selon le procédé de la revendication 10.